# EUROPÄISCHE PATENTANMELDUNG

(11) **EP 4 691 987 A1**
(43) Veröffentlichungstag der Anmeldung: **11.02.2026**
(21) Anmeldenummer: 24020259.8
(22) Anmeldetag: 08.08.2024
(51) Int. Cl.: C01C 1/04, B01J 8/02, B01J 8/04, B01J 8/06

(54) **VERFAHREN UND ANLAGE ZUR HERSTELLUNG EINES VERFAHRENSPRODUKTS**

(71) Anmelder: Linde GmbH, 82049 Pullach (DE)
(72) Erfinder: Pesch, Andreas, 82049 Pullach (DE); Haselsteiner, Thomas, 82049 Pullach (DE); Müller-Thorwart, Ole, 82049 Pullach (DE); Reinke, Michael, 82049 Pullach (DE); Theodor von Trotha, Thilo Frank, 82049 Pullach (DE)
(74) Vertreter: Fischer, Werner

(57) **Zusammenfassung**

Die Erfindung betrifft ein Verfahren zur Herstellung eines Verfahrensprodukts bei dem ein Eduktgemisch (1) einem Reaktor (10), der einen Katalysator aufweist, zugeführt und in dem Reaktor (10) in einer exothermen Reaktion mit einer Aktivierungsenergie katalytisch zumindest teilweise umgesetzt wird, wobei im Verfahren eine Bereitstellung zumindest eines Teils der Aktivierungsenergie unter Verwendung von Wärmeenergie vorgenommen wird, die bei der exothermen Reaktion erzeugt wird, wobei der Reaktor (10) ein direkt gekühlter Reaktor ist und mit einem Katalysator bestückt ist, der auf Ruthenium, Nickel, Kobalt und/oder Eisen mit Promotoren basiert. Die Erfindung betrifft weiterhin eine Anlage (100), die zur Durchführung des Verfahrens ausgelegt ist.

## Beschreibung

Die vorliegende Erfindung betrifft ein Verfahren sowie eine Anlage zur Herstellung von Ammoniak, wobei ein Wasserstoff und Stickstoff umfassendes Eduktgemisch in einem Reaktor nach Zuführung von Aktivierungsenergie mit katalytischer Unterstützung in einer exothermen Reaktion zu einem ammoniakhaltigen Produktgemisch umgesetzt wird.

### Hintergrund

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es praktisch ausschließlich nach dem Haber-Bosch-Verfahren aus Stickstoff und Wasserstoff synthetisiert.

Beim Haber-Bosch-Verfahren wird ein vorwiegend aus Wasserstoff und Stickstoff bestehendes Ammoniaksynthesegas, in dem die beiden Stoffe in dem für die Synthese von Ammoniak stöchiometrischen Verhältnis von 3:1 vorliegen, mit einem Druck zwischen 80 und 300bar und einer Temperatur zwischen 300 und 450°C einem Ammoniakreaktor zugeführt, um mit katalytischer Unterstützung in einer exothermen Reaktion unter Bildung von Ammoniak umgesetzt zu werden. Aufgrund thermodynamischer Limitierungen erfolgt die Umsetzung allerdings nur unvollständig, so dass ein Syntheseprodukt entsteht, das neben Ammoniak auch erhebliche Wasserstoff- und Stickstoffanteile enthält. Mit einer Temperatur zwischen 400 und 450°C verlässt das Syntheseprodukt den Ammoniakreaktor und wird nachfolgend in einer Reihe von Wärmetauschern abgekühlt, um Ammoniak durch Kondensation abzuscheiden und ein weitgehend aus Wasserstoff und Stickstoff bestehendes, Reste nicht auskondensierten Ammoniaks enthaltendes Recyclegas zu erhalten, das zur Erhöhung der Ammoniakausbeute in einem Synthesekreislauf zum Ammoniakreaktor zurückgeführt und dabei mit einem Wasserstoff und Stickstoff umfassenden Make-up-Gas zum Ammoniaksynthesegas gemischt wird.

Üblicherweise sind Ammoniakreaktoren als autotherm betriebene Mehrbettrektoren ausgeführt, die wenigstens zwei strömungstechnisch miteinander verbundene Katalysatorbetten umfassen, die seriell von Ammoniaksynthesegas, das dabei schrittweise zum Syntheseprodukt umgesetzt wird, durchströmt werden können. Nach dem ersten und vor jedem weiteren Katalysatorbett ist jeweils eine Kühleinrichtung angeordnet, über die Reaktionswärme aus dem durch Umsetzung im vorgeschalteten Katalysatorbett erhaltenen Gasgemisch abgeführt wird, um es abgekühlt zur weiteren Umsetzung in das nachgeschaltete Katalysatorbett weiterzuführen Als Kühlmittel bei einer derartigen Zwischenkühlung dient anzuwärmendes nicht umgesetztes Ammoniaksynthesegas. Je nachdem, ob die Wärme dabei direkt oder indirekt auf das Ammoniaksynthesegas übertragbar ist, spricht man in Fachkreisen von Adiabatic-Quench-Cooling- oder AQC-Reaktoren bzw. Adiabatic-Indirect-Cooling- oder AIC-Reaktoren.

Entsprechende Prozesse können mit "grünem" Wasserstoff durchgeführt werden, d.h. mit Wasserstoff, der durch Wasserelektrolyse unter Verwendung erneuerbarer Energiequellen hergestellt wird. Da derartige Energiequellen den für die Elektrolyse benötigten Strom mit zeitlich schwankender Leistung liefen, schwankt auch die für die Ammoniaksynthese bereitstellbare Wasserstoffmenge entsprechend. Da die in herkömmlichen Ammoniakanlagen eingesetzten Reaktoren nur begrenzt teillastfähig sind und sich nur sehr langsam an veränderte Betriebsbedingungen anpassen lassen, kann die Verwendung von grünem Wasserstoff zu erheblichen Problemen führen.

Aufgrund des exothermen Charakters der Synthesereaktion ist eine Ammoniakanlage unabhängig von der Art der Wärmeintegration ein Netto-Wärmeproduzent. Üblicherweise wird zumindest ein Teil der überschüssigen Wärme zur Erzeugung von Exportdampf genutzt. Die Dampferzeugung kann innerhalb oder außerhalb des Ammoniakreaktors erfolgen. Werden ein oder mehrere sog. Feed-Effluent-Wärmetauscher verwendet, kann die Wärme des Produktgemisches direkt genutzt werden. Darüber hinaus ist es möglich, Wärme indirekt zu nutzen, die dabei z.B. über ein Wärmeträgermedium aus dem Reaktor abgeführt und das anschließend gegen zu verdampfendes Wasser abgekühlt wird.

Es besteht der Bedarf nach Verbesserungen in entsprechenden Verfahren und Anlagen, insbesondere hinsichtlich eines flexibleren Betriebs bei niedrigeren Temperaturen.

### Offenbarung der Erfindung

Vor diesem Hintergrund werden ein Verfahren und eine Anlage der gattungsgemäßen Art mit den jeweiligen Merkmalen der unabhängigen Patentansprüche vorgeschlagen. Ausgestaltungen sind Gegenstand der abhängigen Ansprüche und der nachfolgenden Beschreibung.

Das vorgeschlagene Verfahren dient zur Herstellung von Ammoniak und umfasst, dass ein Wasserstoff enthaltendes Eduktgemisch in einem Reaktor nach Zuführung von Aktivierungsenergie mit katalytischer Unterstützung in einer exothermen Reaktion zu einem ammoniakhaltigen Produktgemisch umgesetzt wird. Im Verfahren kann die Bereitstellung zumindest eines Teils der Aktivierungsenergie unter Verwendung von Wärmeenergie vorgenommen werden, die bei der exothermen Reaktion erzeugt wird.

Die vorgeschlagene Lösung umfasst nun, dass der Reaktor ein direkt gekühlter Reaktor ist und einen Katalysator aufweist, der auf Ruthenium, Nickel, Kobalt und/oder Eisen mit Promotoren basiert, d.h. der Katalysator enthält, die zu einem großen Teil aus einem oder mehreren der genannten Materialien bestehen. Bei Eisen mit Promotoren handelt es sich um einen Katalysator auf Eisenbasis dessen Aktivität, insbesondere bei niedrigeren Temperaturen, über die gezielte Einbringung von Zusatzstoffen (Promotoren) erhöht wird. Bei dem direkt gekühlten Reaktor kann es sich insbesondere um einen siedewassergekühlten Reaktor oder um einem Reaktor handeln, der mit Thermo-Öl oder geschmolzenem Salz als Kühlmittel direkt gekühlt wird. Dadurch kann, im Gegensatz zu herkömmlichen Reaktoren, bei denen die bei der exothermen Ammoniaksynthesereaktion erzeugte Wärme nur über das im Reaktor erzeugte Verfahrensprodukt abgeführt wird, kann Wärme auch über das Kühlmittel abgeführt werden, wodurch Reaktorbetreib bei einer niedrigeren Temperatur als im Stand der Technik ermöglicht wird.

Durch die Verwendung eines direkt gekühlten Reaktors werden die Temperaturen im Reaktor auf Temperaturen gesenkt, bei denen herkömmlich verwendete Katalysatoren nicht mehr genutzt werden können, da deren Aktivität bei diesen Temperaturen (in einem siedewassergekühlten Reaktor unter 320°C oder in einem Reaktor mit Thermo-Öl unter 400°C nicht ausreichend für die Reaktion ist bzw. die zu einer geringen Umsetzungsrate führen. Katalysatoren, die auf den genannten Katalysatormaterialien basieren, weisen vorteilhafterweise auch bei diesen niedrigeren Temperaturen eine hohe Aktivität auf, sodass die Umsetzungsrate auch bei niedrigeren Temperaturen hinreichend hoch ist.

Nach dem Prinzip von Le Chatelier ist die Umsetzung der genannten exothermen Reaktionen begrenzt durch ein Reaktionsgleichgewicht, das bei hohen Temperaturen zunehmend ungünstiger wird. Zugleich gibt es häufig eine untere Temperaturgrenze, bis zu der ein geeigneter Katalysator ausreichend aktiv ist.

Dadurch, dass der Reaktor direkt gekühlt wird, kann die Umsetzungsrate im Reaktor erhöht werden, da der Reaktor bei einer niedrigeren Temperatur betrieben werden kann, sodass die Reaktion nicht durch das Reaktionsgleichgewicht eingeschränkt wird.

Weiterhin kann durch die erhöhte Umsetzungsrate der Betriebsdruck im Reaktor reduziert werden, wodurch Investitionskosten durch eine kostengünstigere Auslegung des Reaktors gespart werden.

Weiterhin kann die Temperatur des Reaktors flexibel angepasst werden, sodass der Reaktor in einfacher Weise an die Last angepasst werden kann, wodurch die Lastflexibilität des Reaktors erhöht wird.

In einer Ausführungsform ist der direkt gekühlte Reaktor ein siedewassergekühlter Reaktor mit Wasser als Kühlmittel, wobei das Wasser insbesondere eine Temperatur von 320°C oder 300°C oder 270°C nicht überschreitet. Dadurch kann die Umsetzungsrate gesteigert werden, da die Umsetzung des Eduktgemischs zum Verfahrensprodukt bei einer Temperatur stattfindet, bei der die Reaktion nicht durch das Reaktionsgleichgewicht eingeschränkt ist. Der dabei entstehende Wasserdampf kann insbesondere einer Dampfturbine zur Erzeugung elektrischer Energie zugeführt werden. Die Kondensationsenergie des Wasserdampfes kann weiterhin zur Erwärmung des Eduktgemischs verwendet werden.

Die Temperatur des Wassers und damit die Temperatur im Reaktor sowie die Aktivität des Katalysators werden anhand des Drucks des als Kühlmittel verwendeten Wassers angepasst. Dadurch kann die Umsetzungsrate des Reaktors in einfacher Weise an die Last angepasst werden.

In einer Ausführungsform, bei der der direkt gekühlte Reaktor mit Thermo-Öl oder geschmolzenem Salz als Kühlmittel gekühlt wird, wird die Wärme des Thermo-Öls oder des geschmolzenen Salzes mit einem Wärmetauscher aus dem Kühlmittel entfernt. Die Wärme des Thermo-Öls bzw. des geschmolzenen Salzes kann anschließend beispielsweise zur Dampferzeugung verwendet werden. Aus dem erzeugten Dampf kann anschließend über eine Dampfturbine elektrische Energie erzeugt werden, wobei die Kondensationswärme des erzeugten Wasserdampfes zur Erwärmung des Eduktgemischs verwendet werden kann. Alternativ oder zusätzlich kann ein Teil der Wärme aus dem Thermo-Öl bzw. dem geschmolzenen Salz direkt zur Erwärmung des Eduktgemischs verwendet werden.

Die Temperatur des Thermo-Öls bzw. des geschmolzenen Salzes, und damit die Temperatur im Reaktor und die Aktivität des Katalysators, können angepasst werden, indem die Wärmemenge, die durch den Wärmetauscher aus dem Kühlmittel entfernt wird, konttrolliert wird. Dadurch wird die Lastflexibilität des Reaktors erhöht.

Zusätzlich kann ein Anfahrheizer verwendet werden, um die Temperatur des Thermo-Öls bzw. des geschmolzenen Salzes zu erhöhen, wodurch die Temperatur im Reaktor und die Aktivität des Katalysators erhöht wird. Dadurch ist es vorteilhafterweise möglich, den Reaktor nach einer Lastreduktion schnell wieder zu einer höheren Last hochzufahren.

In einer Ausführungsform wird die Aktivität des Katalysators durch Anlegen eines elektrischen Felds angepasst. In diesem Fall kann der Reaktor zusätzlich zu den zuvor genannten Katalysatoren auch mit einem eisenbasierten Katalysator ohne Promotoren, basiert bestückt sein.

In einer Ausführungsform wird das Katalysatormaterial auf Kohlenstoff-Nanoröhren als Trägermaterial aufgebracht, wodurch die Aktivität des Katalysators, und damit die Umsetzungsrate des Eduktgemischs im Reaktor, gesteigert werden können, wodurch sich die die Effizienz bei der Herstellung des Verfahrensprodukts erhöht.

In einer Ausgestaltung weist der Reaktor mehrere seriell angeordnete Reaktionsbetten auf. Insbesondere können verschiedene Reaktionsbetten unterschiedliche Katalysatoren aufweisen. Beispielsweise ist es vorteilhaft, wenn der Reaktor drei Reaktionsbetten aufweist, die ersten beiden Reaktionsbetten mit Katalysatoren auf Nickel-Basis zu bestücken, während das dritte Reaktionsbett mit einem Katalysator auf Ruthenium-Basis bestückt wird. Andere Kombinationen von Katalysatoren sind ebenso denkbar.

Durch die Bestückung mit unterschiedlichen Katalysatoren kann vorteilhafterweise die Ausbeute des Verfahrensprodukts gesteigert werden.

In einer Ausgestaltung werden mehrere, insbesondere zwei, Reaktoren zur Umsetzung des Eduktgemischs verwendet, wobei die Reaktoren seriell oder parallel angeordnet sind. Durch die Verwendung mehrerer Reaktoren kann die Lastflexibilität des Verfahrens erhöht werden. Beispielsweise kann bei einer parallelen Anordnung der Reaktoren einer der beiden Reaktoren abgeschaltet werden und durch das Kühlmittel, das für beide Reaktoren verwendet wird, warmgehalten werden, wodurch bei wieder ansteigender Last der zweite Reaktor in kurzer Zeit hochgefahren werden kann. Bei einer seriellen Anordnung der Reaktoren kann der stromabwärts angeordnete Reaktor mit Rohren mit größerem Durchmesser ausgelegt werden, da die Reaktionswärme geringer ist. Weiterhin ist es möglich seriell angeordnete Reaktoren nach dem dualen Druckkonzept zu betreiben. Dabei wird ein Teil des Eduktgemischs bereits bei niedrigerem Druck zu Ammoniak umgewandelt und aus dem Kreislauf entfernt, bevor das nicht umgewandelte Gas in einem Verdichter verdichtet und mit dem Hochdruck-Kreislaufgas gemischt wird.

Ausgestaltungen des vorgeschlagenen Verfahrens können zur Herstellung von Ammoniak, Methan oder Methanol als Verfahrensprodukt verwendet werden, wobei das Eduktgemisch Wasserstoff enthält.

Das oben dargestellte Reaktorsystem ist beispielhaft und das Grundkonzept der Erfindung kann auf andere Reaktortypen übertragen werden. Die Erfindung kann also neben der Ammoniaksynthese auch in anderen chemischen Prozessen eingesetzt werden, bei denen eine gleichgewichtsbegrenzte exotherme Reaktion abläuft. Dazu gehören zum Beispiel die Methanol- und Methansynthese.

Die vorgeschlagene Anlage zur Herstellung eines Verfahrensprodukts weist einen Reaktor auf, der mit einem Katalysator bestückt ist, und ist dafür eingerichtet, ein Eduktgemisch dem Reaktor zuzuführen und in dem Reaktor in einer exothermen Reaktion mit einer Aktivierungsenergie katalytisch zumindest teilweise umzusetzen, wobei eine Bereitstellung zumindest eines Teils der Aktivierungsenergie unter Verwendung von Wärmeenergie vorgenommen wird, die bei der exothermen Reaktion erzeugt wird. Dabei ist vorgesehen, dass der Reaktor ein direkt gekühlter Reaktor, insbesondere ein siedewassergekühlter Reaktor mit Wasser als Kühlmittel oder ein direkt gekühlter Reaktor mit Thermo-Öl oder geschmolzenem Salz als Kühlmittel ist.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügten Zeichnungen beschrieben, wobei
Figur 1 ein schematisches Grundkonzept eines Verfahrens bzw. einer Anlage zur Herstellung von Ammoniak gemäß einer Ausführungsform der Erfindung veranschaulicht,
Figur 2 eine Anlage zur Herstellung von Ammoniak gemäß einer Ausführungsform der Erfindung zeigt.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorliegende Erfindung und Ausgestaltungen hiervon werden nachfolgend unter Bezugnahme auf eine Ammoniaksynthese erläutert. Wie mehrfach angesprochen, ist die Erfindung jedoch nicht hierauf beschränkt.

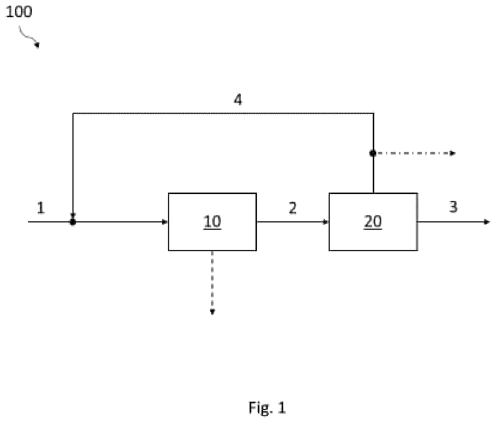

In Figur 1 ist schematisch ein Grundkonzept eines Verfahrens bzw. einer Anlage 100 zur Herstellung von Ammoniak gemäß einer Ausführungsform der Erfindung dargestellt.

Das Verfahren bzw. die Anlage 100 umfasst einen Reaktor 10 und eine stromabwärts des Reaktors 10 angeordnete Abtrenneinheit 20. Der Reaktor 10 enthält dabei eines oder mehrere Reaktionsbetten 11, 12, 13 (in Figur 1 nicht dargestellt), die jeweils mit Katalysatoren bestückt sind. Der oder die verwendeten Katalysatoren basieren dabei auf Ruthenium, Nickel, Kobalt und/oder Eisen mit Promotoren.

Dem Reaktor 10 wird ein Eduktgemisch 1, das insbesondere Wasserstoff enthält, zugeführt und in dem Reaktor 10 in einer exothermen Reaktion katalytisch zumindest teilweise zu einem Verfahrensprodukt 2 umgesetzt. Das entstandene Verfahrensprodukt 2 wird anschließend einer Abtrenneinheit 20 zugeführt, in der ein aufbereitetes Produkt 3 von im Reaktor nicht umgesetzten Teilen des Eduktgemischs 4 getrennt wird. Die nicht abgetrennten Teile des Eduktgemischs 4 werden anschließend zumindest teilweise stromaufwärts des Reaktors 10 mit dem Eduktgemisch 1 gemischt und dem Reaktor 10 zugeführt. Der verbleibende Teil des nicht umgesetzten Eduktgemischs 4 kann aus dem Kreislauf entnommen werden (strich-gepunktete Linie) und für andere Prozesse verwendet werden.

Bei dem Reaktor 10 handelt es sich um einen direkt gekühlten Reaktor der mit Wasser, Thermo-Öl oder geschmolzenem Salz als Kühlmittel gekühlt wird.

Bei der Kühlung mit Wasser verdampft das Wasser zu Wasserdampf, der anschließend einer Dampfturbine (nicht gezeigt) zur Stromerzeugung zugeführt werden kann (gestrichelte Linie). Weiterhin kann die Kondensationsenergie des Wasserdampfs dazu verwendet werden das Eduktgemisch, bevor es dem Reaktor 10 zugeführt wird, zu erwärmen.

Wird Thermo-Öl oder geschmolzenes Salz als Kühlmittel im direkt gekühlten Reaktor verwendet, kann Wärme (gestrichelte Linie) durch einen Wärmetauscher aus dem Kühlmittel entfernt werden. Die entfernte Wärme kann direkt zu Erwärmung des Eduktgemischs verwendet werden. Weiterhin kann die Wärme dazu genutzt werden, Wasserdampf zu erzeugen, der einer Dampfturbine zur Erzeugung elektrischer Energie zugeführt werden kann.

Die Temperatur im direkt gekühlten Reaktor kann, im Fall von Wasser als Kühlmittel, über den Druck des Wassers eingestellt werden, wobei die Temperatur des Wassers eine Temperatur von 320°C oder 300°C oder 270°C nicht überschreitet.

Im Fall von Thermo-Öl oder geschmolzenem Salz als Kühlmittel wird die Temperatur des Reaktors 10 über die durch den Wärmetauscher aus dem Kühlmittel entfernte Wärme geregelt. Weiterhin kann ein Anfahrheizer (nicht gezeigt) vorgesehen sein, der die Temperatur des Thermo-Öls oder geschmolzenen Salzes schnell erhöhen kann, sodass der Reaktor 10 in kurzer Zeit auf eine erhöhte Betriebstemperatur gebracht werden kann.

Durch die niedrigere Betriebstemperatur des Reaktors 10 können herkömmliche Katalysatoren nicht mehr verwendet werden, da deren Aktivität bei den niedrigen Temperaturen zu gering ist. Ebenfalls können die genannten Katalysatoren auf einem neuen, innovativen Trägermaterial, beispielsweise Kohlenstoff-Nanoröhren, aufgebracht sein, um die Aktivität zu erhöhen und so den Betrieb des Reaktors bei niedrigeren Temperaturen zu ermöglichen.

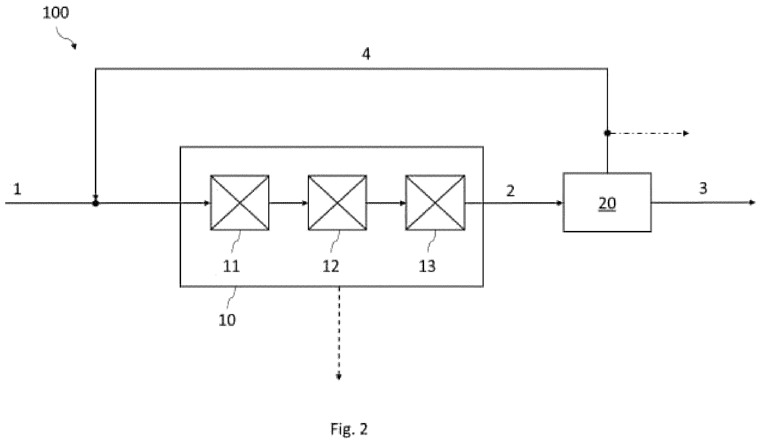

In Figur 2 ist eine Anlage 100 zur Herstellung von Ammoniak gemäß einer weiteren Ausgestaltung der Erfindung gezeigt.

Der Reaktor 10 weist dabei ein erstes, zweites und drittes Reaktionsbett 11, 12, 13 auf, die in Reihe miteinander verbunden sind. Jedes der Reaktionsbetten 11, 12, 13 kann dabei insbesondere einen Katalysator aus dem gleichen Material aufweisen. Vorteilhafterweise wird im am weitesten stromabwärts angeordneten Reaktionsbett 13 ein anderer Katalysator verwendet. Beispielsweise können die beiden stromaufwärts angeordneten Reaktionsbetten 11, 12 mit einem Katalysator auf Nickel-Basis bestückt sein, während das stromabwärts gelegene Reaktionsbett 13 mit einem Katalysator auf Ruthenium-Basis bestückt ist.

Weiterhin können die Katalysatoren im Reaktor 10 einem elektrischen Feld ausgesetzt werden, über das die Aktivität des Katalysators moderiert und damit die

Umsetzungsrate im Reaktor 10 angepasst werden kann. Dadurch kann in Phasen mit hoher Last die Aktivität der Katalysatoren, und damit die Umsetzrate, erhöht werden, während in Phasen mit niedrigerer Last die Aktivität der Katalysatoren verringert werden kann, bzw. ohne das Anlegen eines elektrischen Feldes auf die Aktivität der Katalysatoren an sich, reduziert werden kann. Zusätzlich können dabei die Reaktionsbetten auch einen Katalysator der auf Eisen, ohne Promotoren, basiert bestückt sein.

Während in den Figuren 1 und 2 Anlagen 100 mit nur einem Reaktor 10 gezeigt sind, ist es weiterhin möglich, das Verfahren in einer Anlage 100 mit zwei oder mehr Reaktoren 10 durchzuführen. Die Reaktoren 10 können dabei seriell oder parallel angeordnet sein. Bei einer seriellen Anordnung kann beispielsweise auch ein duales Druckkonzept angewendet werden, bei dem ein Teil des Eduktgemischs bereits bei niedrigerem Druck zu Ammoniak umgewandelt und aus dem Kreislauf entfernt wird, bevor das nicht umgewandelte Gas in einem Verdichter verdichtet und mit dem Hochdruck-Kreislaufgas gemischt wird. Eine parallele Anordnung hat den Vorteil, dass bei geringer Last einer der beiden Reaktoren 10 abgeschaltet werden kann. Um ein schnelles Hochfahren des abgeschalteten Reaktors 10 zu ermöglichen, wird dieser Reaktor 10 mit Hilfe des für die Kühlung verwendeten Kühlmittels warmgehalten.

## Patentansprüche

1. Verfahren zur Herstellung eines Verfahrensprodukts (2) bei dem ein Eduktgemisch (1) einem Reaktor (10) zugeführt und in dem Reaktor (10), der einen Katalysator aufweist, in einer exothermen Reaktion mit einer Aktivierungsenergie katalytisch zumindest teilweise umgesetzt wird, **dadurch gekennzeichnet, dass** der Reaktor (10) ein direkt gekühlter Reaktor ist und mit einem Katalysator bestückt ist, der auf Ruthenium, Nickel, Kobalt und/oder Eisen mit Promotoren basiert.

2. Verfahren nach Anspruch 1, bei dem der direkt gekühlte Reaktor ein siedewassergekühlter Reaktor mit Wasser als Kühlmittel ist, wobei insbesondere das Wasser eine Temperatur von 320°C oder 300°C oder 270°C nicht überschreitet.

3. Verfahren nach Anspruch 1, bei dem der direkt gekühlte Reaktor mit Thermo-Öl oder geschmolzenem Salz als Kühlmittel gekühlt wird.

4. Verfahren nach dem vorhergehenden Anspruch, bei dem Wärme mit einem Wärmetauscher aus dem Kühlmittel entfernt wird.

5. Verfahren nach einem der vorhergehenden Ansprüche, wobei die Aktivität des Katalysators durch Anlegen eines elektrischen Feldes an die Katalysatoren angepasst wird.

6. Verfahren nach einem der vorhergehenden Ansprüche, wobei ein Katalysatormaterial des Katalysators auf Kohlenstoff-Nanoröhren als Trägermaterial aufgebracht ist.

7. Verfahren nach einem der vorhergehenden Ansprüche, bei dem der Reaktor (10) mehrere, insbesondere zwei oder drei, seriell angeordnete Reaktionsbetten (11, 12, 13) aufweist.

8. Verfahren nach dem vorhergehenden Anspruch, wobei die Katalysatoren in wenigstens zwei der Reaktionsbetten (11, 12, 13) aus unterschiedlichen Materialien bestehen.

9. Verfahren nach einem der vorhergehenden Ansprüche, wobei das Verfahren mit zwei Reaktoren (10) durchgeführt wird, die in Serie oder parallel zueinander angeordnet sind.

10. Verfahren nach einem der vorstehenden Ansprüche, bei dem das Eduktgemisch (1) Wasserstoff enthält und das Verfahren zur Herstellung von Ammoniak, Methan oder Methanol als Verfahrensprodukt (2) verwendet wird.

11. Anlage (100) zur Herstellung eines Verfahrensprodukts (2) mit einem Reaktor (10) wobei die Anlage (100) dafür eingerichtet ist, ein Eduktgemisch (1) dem Reaktor (10), der einen Katalysator aufweist, zuzuführen und in dem Reaktor (10) in einer exothermen Reaktion mit einer Aktivierungsenergie katalytisch zumindest teilweise umzusetzen, **dadurch gekennzeichnet, dass** der Reaktor (10) ein direkt gekühlter Reaktor ist und mit einem Katalysator bestückt ist, der auf Ruthenium, Nickel, Kobalt und/oder Eisen mit Promotoren basiert.

12. Anlage (100) nach Anspruch 11, bei dem der direkt gekühlte Reaktor ein siedewassergekühlter Reaktor ist, der mit Wasser als Kühlmittel gekühlt wird, oder ein direkt gekühlter Reaktor ist, der mit Thermo-Öl oder geschmolzenem Salz als Kühlmittel gekühlt wird.
